# EUROPEAN PATENT APPLICATION

(11) **EP 2 236 123 A1**
(43) Date of publication of application: **06.10.2010**
(21) Application number: 09703363.3
(22) Date of filing: 21.01.2009
(51) Int. Cl.: A61K 8/00, A61Q 1/00, A61Q 1/04, A61Q 1/10, G06T 1/00

(54) **MAKEUP METHOD, MAKEUP SIMULATION DEVICE, AND MAKEUP SIMULATION PROGRAM**

(30) Priority: 22.01.2008 JP 2008012013; 20.01.2009 JP 2009010416
(71) Applicant: Shiseido Company, Ltd., Chuo-ku Tokyo 104-8010 (JP)
(72) Inventor: KAMADA, Yumiko, Tokyo 104-8010 (JP); SUNAKAWA, Keiko, Tokyo 104-8010 (JP); MUKAI, Shiomi, Tokyo 104-8010 (JP); TAKANO, Ruriko, Tokyo 104-8010 (JP); GOTO, Yasuo, Tokyo 104-8010 (JP); TAGAO, Sayaka, Tokyo 104-8010 (JP)
(74) Representative: Vinsome, Rex Martin
(86) International application number: PCT/JP2009/050892
(87) International publication number: WO 2009/093617

(57) **Abstract**

A makeup method for applying makeup to a side face of a subject includes a side-face specific area extracting step of extracting a specific area from a side face rendered on a plane of a subject, a makeup area extracting step of extracting a makeup area of the subject to which the makeup is to be applied based on a plurality of thus extracted specific areas, and a makeup applying step of applying the makeup to a facial area of the subject corresponding to the extracted makeup area.

## Description

### TECHNICAL FIELD

The present disclosure relates to a makeup method, a makeup simulation device, and a makeup simulation program which are adapted to apply makeup to a side face of a subject.

### BACKGROUND ART

There are various makeup methods for pursuing beauty which have been studied for all ages and in all places. The world is flooded with information related to makeup methods. Such information can be easily obtained from the media, such as magazines, books, television programs. One can get any of various makeup methods, such as an eyebrow drawing technique and an eye makeup technique, immediately when finding it.

However, those makeup methods are centered on a front face of a person when viewed from the front of the person. It can be said that there is almost no systematic information about a makeup method which is centered on a side face of a person when viewed from a lateral direction or in which a side face of a subject is taken into consideration.

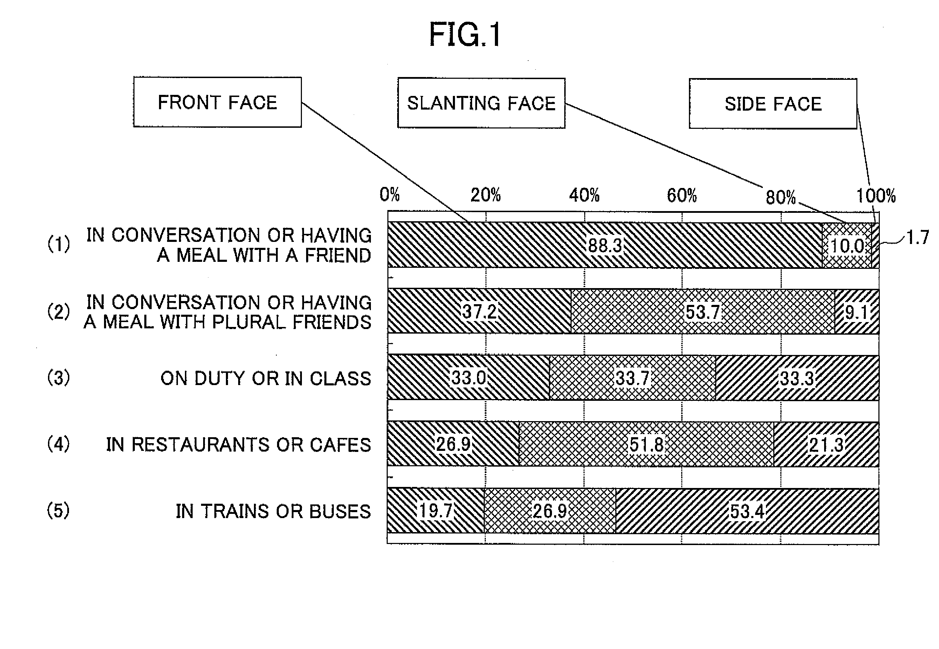

When a questionnaire research has been performed to people at the age of twenties to forties (100 samples for each) via the Internet by asking the questionnaire: among the face angles (a front face, a slanting face, a side face) which is the one that people are most concerned about in some particular situations, such as (1) in conversation or having a meal with a friend, (2) in conversation or having a meal with plural friends, (3) on duty or in class; (4) in restaurants or cafes, and (5) in trains or buses, the results of the research are as illustrated in FIG. 1.

FIG. 1 illustrates the results of the research as to which of the face angles (a front face, a slanting face, and a side face) is the one that the people are most concerned about in the particular situations. As illustrated in FIG. 1, the people who are most concerned about the "front face" in conversation or having a meal with a friend were 88.3%, and the people who are most concerned about the "side face" in the same situation were only 1.7%. However, it is found out that, when they go to public places where many people meet together, such as in restaurants or cafes and in trains or buses, the people who are most concerned about the "slanting face" or the "side face" are sharply increased in number as illustrated in FIG. 1.

For example, when taking trains or buses, the people who are most concerned about the "front face" were 19.7%, the people who are most concerned about the "slanting face" were 26.9%, and the people who are most concerned about the "side face" were 53.4%.

As is apparent from those results, it is found out that, when they go to public places where many people meet together, the majority are most concerned about the "side face" rather than the "front face".

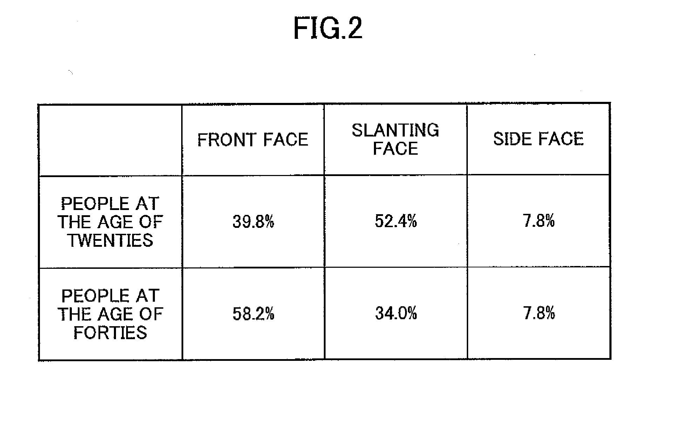

On the other hand, when another research has been performed to people at the age of twenties to forties by a similar Internet research by asking the questionnaire: which of the face angles is the most favorite one that the people consider with respect to their own faces, the results of the research are as illustrated in FIG. 2.

FIG. 2 illustrates the results of the research as to which of the face angles is the most favorite one that people at the age of twenties and forties consider with respect to their own faces. As illustrated in FIG. 2, both the people at the age of twenties and the people at the age of forties who answered the "side face" as being the favorite face angle were only 7.8%.

When another research has been performed to 18 cosmetics engineers by asking the questionnaire: whether they are conscious of the "side face" during makeup jobs, the results of the research are as follows. The people who answered that they are slightly conscious were 72% of the whole, and the person who answered that they are considerably conscious were only 17% of the whole. The people who answered that they are seldom conscious were 6%, and the people who answered that they are unsure of whether or not they are conscious were 6%.

These results show that even the cosmetics engineers who are usually familiar with makeup jobs are slightly conscious of the "side face" and slightly concerned about the way the "side face" is when viewed from the lateral direction.

### DISCLOSURE OF THE INVENTION

### PROBLEM TO BE SOLVED BY THE INVENTION

As described above, the makeup methods according to the related art are centered on the "front face" of a person and take into consideration the way the "front face" of a person is when viewed from the front of the person. In the makeup methods according to the related art, the way the "side face" of a person is when viewed from the lateral direction of the person is not taken into consideration.

Therefore, a makeup method to make the "side face" beautiful is not actually established although the "side face" is often concerned about when going to public places where many people meet together. In the current situations, although the "front face" is made beautiful, effective measures for making the "side face" beautiful are not taken.

In an aspect, the present disclosure provides a makeup method, a makeup simulation device, and a makeup simulation program which are adapted to apply makeup to a side face of a subject effectively, in order to attain a beautiful makeup no matter where the subject may be viewed from.

### MEANS FOR SOLVING THE PROBLEM

In order to solve one or more of the above-described problems, the present disclosure provides a makeup method for applying makeup to a side face of a subject, the makeup method including: a side-face specific area extracting step of extracting a specific area from a side face of the subject rendered on a plane of the subject; a makeup area extracting step of extracting a makeup area to which the makeup is to be applied based on a plurality of specific areas of the side face extracted in the side-face specific area extracting step; and a makeup step of applying the makeup to a facial area of the subject corresponding to the makeup area extracted in the makeup area extracting step.

Moreover, the present disclosure provides a makeup simulation device for applying makeup to a subject in a photographic image which is generated by capturing a side face of the subject, the makeup simulation device including: a side-face outline extracting unit to extract an outline of a side face contained in the photographic image; a side-face specific area extracting unit to extract a specific area of the side face based on the outline of the side face extracted by the side-face outline extracting unit; a makeup area extracting unit to extract a makeup area of the subject in the photographic image to which the makeup is to be applied, based on a plurality of specific areas extracted by the side-face specific area extracting unit; and a makeup unit to apply the makeup to the makeup area extracted by the makeup area extracting unit.

Moreover, the present disclosure provides a makeup simulation program which, when executed by a computer, causes the computer to execute a makeup method in a makeup simulation device, the makeup method including: extracting, by a side-face outline extracting unit of the makeup simulation device, an outline of a side face contained in the photographic image; extracting, by a side-face specific area extracting unit of the makeup simulation device, a specific area of the side face based on the outline of the side face extracted by the side-face outline extracting unit; extracting, by a makeup area extracting unit of the makeup simulation device, a makeup area of the subject in the photographic image to which the makeup is to be applied, based on a plurality of specific areas extracted by the side-face specific area extracting unit; and applying, by a makeup unit of the makeup simulation device, the makeup to the makeup area extracted by the makeup area extracting unit.

### EFFECTS OF THE INVENTION

According to the present disclosure, it is possible to provide a makeup method, a makeup simulation device, and a makeup simulation program which are adapted to apply makeup to a side face of a subject effectively and to obtain a beautiful makeup no matter where the subject may be viewed from.

### BRIEF DESCRIPTION OF THE DRAWINGS

FIG. 1 is a diagram illustrating results of a research as to which of the face angles (a front face, a slanting face, and a side face) is the one that people most concerned about in some particular situations.
FIG. 2 is a diagram illustrating results of a research as to which of the face angles is the most favorite one that people at the age of twenties and forties consider with respect to their own faces.
FIG. 3 is a diagram illustrating results of a research about the focus of attention that is considered by cosmetics engineers as a beautiful side face.
FIG. 4 is a diagram for explaining a method of setting up a makeup area according to an embodiment of the present disclosure.
FIG. 5 is a diagram for explaining a method of setting up a nose tip in order to set up a makeup area according to this embodiment.
FIG. 6 is a diagram explaining a method of setting up a reference point of a third line in order to set up a makeup area according to this embodiment.
FIGs. 7A, 7B and 7C are diagrams for explaining the relationship between a set-up makeup area of the face and a cubic effect of the face using three-dimensional configuration data of the face.
FIG. 8 is a diagram for explaining a method of applying makeup to an eyebrow tip portion in a makeup area according to this embodiment.
FIG. 9 is a diagram for explaining a method of applying makeup to an eye in a makeup area according to this embodiment.
FIG. 10 is a diagram for explaining a method of applying makeup to a cheek in a makeup area according to this embodiment.
FIG. 11 is a diagram for explaining a method of applying makeup to a corner-of-mouth portion in a makeup area according to this embodiment.
FIGs. 12A and 12B are diagrams illustrating photograph panels for explaining the verification of an effect of gradation makeup applied to an eyebrow tip portion according to this embodiment.
FIGs. 13A, 13B and 13C are diagrams illustrating photograph panels for explaining the verification of an effect of the length of the eyebrow tip portion according to this embodiment.
FIGs. 14A, 14B and 14C are diagrams illustrating photograph panels for explaining the verification of an effect of the cheek makeup according to this embodiment.
FIGs. 15A, 15B, 15C, 15D and 15E are diagrams illustrating photograph panels of makeup stage levels I, II, III, IV and V, respectively, for explaining the verification of the makeup effect according to this embodiment.
FIGs. 16A, 16B, 16C, 16D and 16E are diagrams illustrating photograph panels of makeup stage levels I, II, III, IV and V, respectively, for explaining the verification of the makeup effect according to this embodiment.
FIGs. 17A, 17B, 17C, 17D and 17E are diagrams illustrating photograph panels of front face images which correspond to the side face images of FIGs. 15A, 15B, 15C, 15D and 15E respectively.
FIGs. 18A, 18B, 18C, 18D and 18E are diagrams illustrating photograph panels of front face images which correspond to the side face images of FIGs. 16A, 16B, 16C, 16D and 16E respectively.
FIG. 19 is a diagram illustrating results of a questionnaire research as to which is considered a beautiful side face and a beautiful front face among the photograph panels of FIGs. 15A-15E and among the photograph panels of FIGs. 17A-17E respectively.
FIG. 20 is a diagram illustrating results of a questionnaire research as to which is considered a beautiful side face and a beautiful front face among the photograph panels of FIGs. 16A-16E and among the photograph panels of FIGs. 18A-18E respectively.
FIG. 21 is a diagram illustrating the functional composition of a makeup simulation device according to this embodiment.
FIG. 22 is a diagram illustrating the hardware composition of a computer which carries out a makeup simulation processing according to this embodiment.
FIG. 23 is a flowchart for explaining a makeup simulation method which carries out the makeup simulation processing according to this embodiment.

### DESCRIPTION OF REFERENCE NUMERALS

- 10: first line
- 20: second line
- 30: third line
- 40: fourth line
- 50: fifth line
- 60: sixth line
- 70: seventh line
- 100: eyebrow ridge
- 101: tip of nose
- 102: base of ear
- 103: midpoint
- 200: makeup area
- 300: central area
- 400: makeup simulation device
- 401: input unit
- 402: output unit
- 403: data storing unit
- 404: side-face outline extracting unit
- 405: side-face specific area extracting unit
- 406: makeup area extracting unit
- 407: makeup unit
- 408: image generating unit
- 409: control unit
- 411: input device
- 412: output device
- 413: drive device
- 414: auxiliary memory device
- 415: memory device
- 416: CPU
- 417: network connection device
- 418: recording medium

### BEST MODE FOR CARRYING OUT THE INVENTION

In the following, a description will be given of embodiments of the present disclosure with reference to the accompanying drawings.

The present disclosure is based on the recognition that creating a "feeling of depth" of a face is important in a case of the "side face", there is a "depth balance" of a beautiful side face which has never been present in a case of the "front face", and the depth balance may be expressed by applying makeup, to attain a beautiful makeup of a person no matter where the person may be viewed from.

This is confirmed by results of a photographic analysis and a questionnaire research about the side face and the front face, which were performed to 18 cosmetics engineers who have makeup experiences over 6 years, in order to examine the points of a beautiful side face to which attention is to be paid, the commonly applicable techniques to make the side face beautiful, and the balance of a beautiful side face.

First, a total of 20 monitors, including 14 persons consisting of 7 types x 2 persons who were extracted from the features of the side face and 6 persons who were extracted from the features of the front face, were selected from among 100 persons as photograph panels used for the questionnaire research. From the photograph panels of these 20 monitors, the ranking of the side faces considered to be "beautiful" or not to be "beautiful" and the reasons were obtained from the cosmetics engineers.

Moreover, comments on the side faces of the eight monitors indicating concretely how to apply makeup to make a beautiful side face were obtained from the cosmetics engineers.

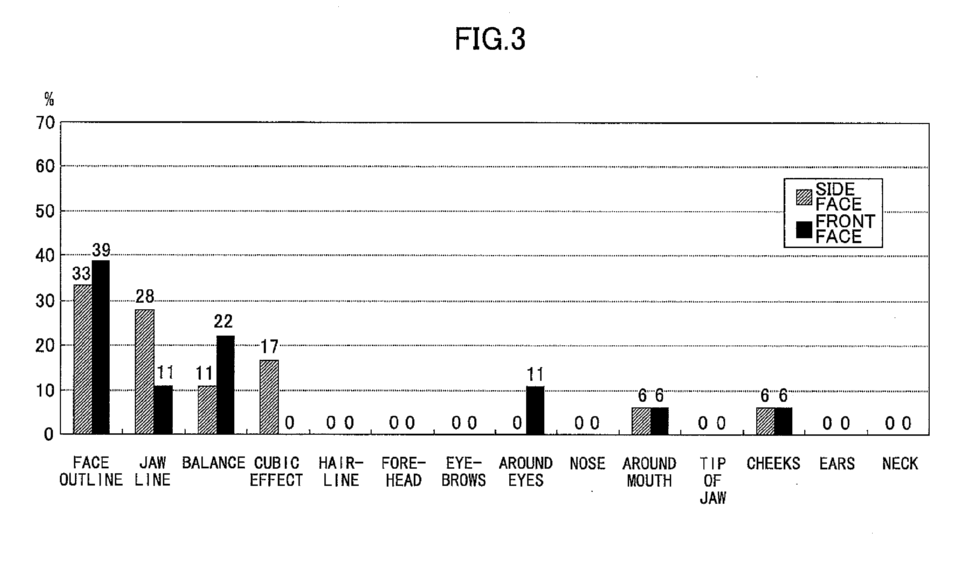

FIG. 3 illustrates the results of the research about the focus of attention that is considered by the cosmetics engineers as a beautiful side face. As illustrated in FIG. 3, it is found out that, according to the cosmetics engineers, when selecting a beautiful side face (non-makeup face), their attention is paid to "face outline", "jaw line", "cubic effect", and "balance".

On the other hand, it is found out that many cosmetics engineers pay their attention to "face outline", "jaw line", and "balance" when selecting a front face. However, the results show that there was no cosmetics engineer who pays attention to "cubic effect" when selecting a front face. Accordingly, creating a "feeling of depth" of the face which is not present in a case of the front face is important for a beautiful side face.

According to the results of the questionnaire, it is found out that "form balance of a side face", "size and arrangement balance of the parts of the face", and " balance of skeleton, feeling of flesh, and cubic effect" are also important for a beautiful side face.

In the present disclosure, the following makeup areas are set up as areas for performing an effective makeup method in order to create "feeling of depth" of the face by taking into consideration the above balance.

The setting of the makeup areas can be performed roughly by a cosmetics engineer by directly applying a pencil, etc. to a side face of a subject. When a cosmetics engineer performs a makeup job while explaining to the subject, the makeup job may be performed such that a mirror is set in a state in which an image of the side face is visible to the subject. During the makeup job, a predetermined scale may be used.

However, a face has a three-dimensional configuration, and when setting up the makeup areas actually at the spots of counseling, such as a cosmetics sales corner of a department store, a beauty salon, etc., it may be difficult to directly set up a three-dimensional configuration makeup area to a subject's (customer) face. Thus, when it is difficult to directly set up a three-dimensional makeup area to a face, the following setting method may be used.

Namely, in such a method, at the spot of counseling, such as a cosmetics sales corner of a department store, a beauty salon, etc., an image of a side face of a subject is captured by using a digital camera, a cellular phone, or a real-time makeup simulator, and setting up a makeup area of the subject is set up based on a screen of the captured image.

In the following, when illustration of a makeup area is needed, this captured image will be illustrated in the accompanying drawings, and a description thereof will be given.

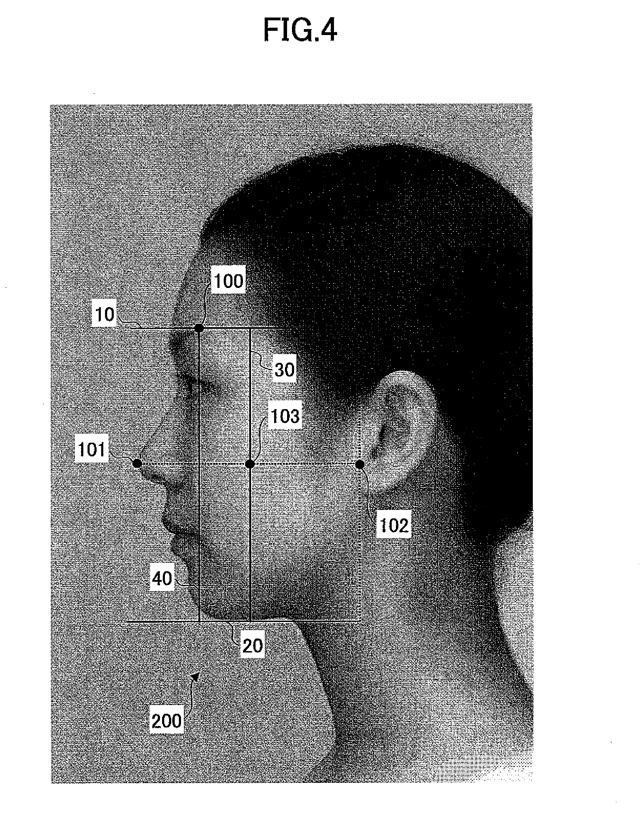

A method of setting up a makeup area will be described. FIG. 4 is a diagram for explaining a method of setting up a makeup area according to an embodiment of the present disclosure. As illustrated in FIG. 4, when setting up a makeup area 200, a line is horizontally drawn from a eyebrow ridge 100 to a hairline based on the side face disposed in a horizontal position. It is supposed that this line is a line 10 (the first line). The eyebrow ridge 100 is a point of the eyebrow inside the corner of an eye area (just above the end of the eye white) at about 2/3 of the eyebrow length from a start point of the eyebrow (the beginning of the eyebrow) when viewed from the front.

Subsequently, a line is horizontally drawn from a jaw point of the side face (or under the jaw) to a neck. It is supposed that this line is a line 20 (the second line).

Subsequently, in the above-described side face, a horizontal line segment which connects a tip 101 of the nose and a base 102 of the ear is drawn, and a line is vertically drawn from a midpoint 103 of the line segment. It is supposed that this line is a line 30 (the third line). A line is vertically drawn from the eyebrow ridge 100. It is supposed that this line is a line 40 (the fourth line).

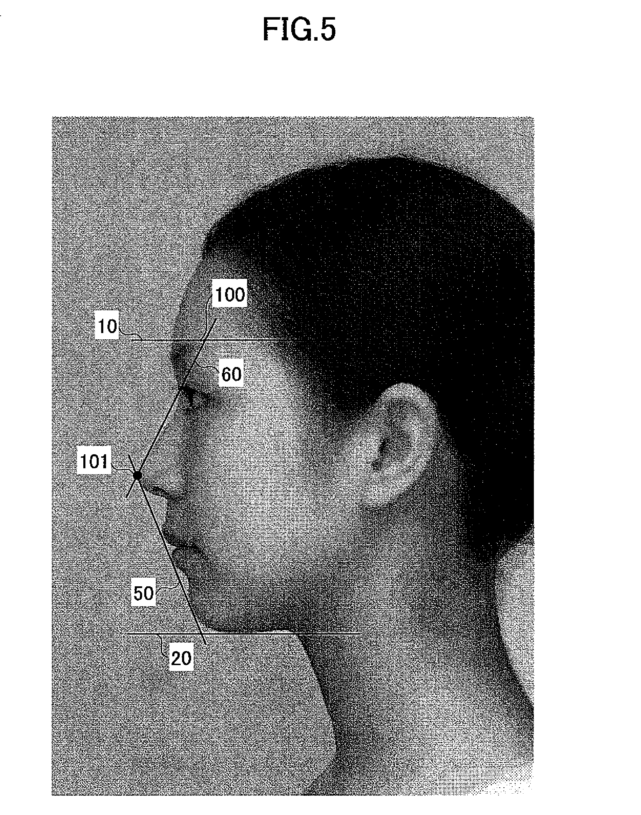

Next, a method of setting up the tip 101 of the nose of the side face will be described. FIG. 5 is a diagram for explaining a method of setting up a tip of a nose in order to set up the makeup area more accurately according to this embodiment. As illustrated in FIG. 5, the tip 101 of the nose is set up in the side face using a line 50 (the fifth line) which is a straight line which is drawn from the tip 101 of the nose to the point of the jaw, and a line 60 (the sixth line) which is a straight line drawn from the eyebrow ridge 100 to the tip 101 of the nose. The line 50 may also called E line.

As illustrated in FIG. 5, the tip 101 of the nose may be set up as being an intersection of the line 50 and the line 60. The tip 101 of the nose may be approximated by the peak point of the nose in the side face.

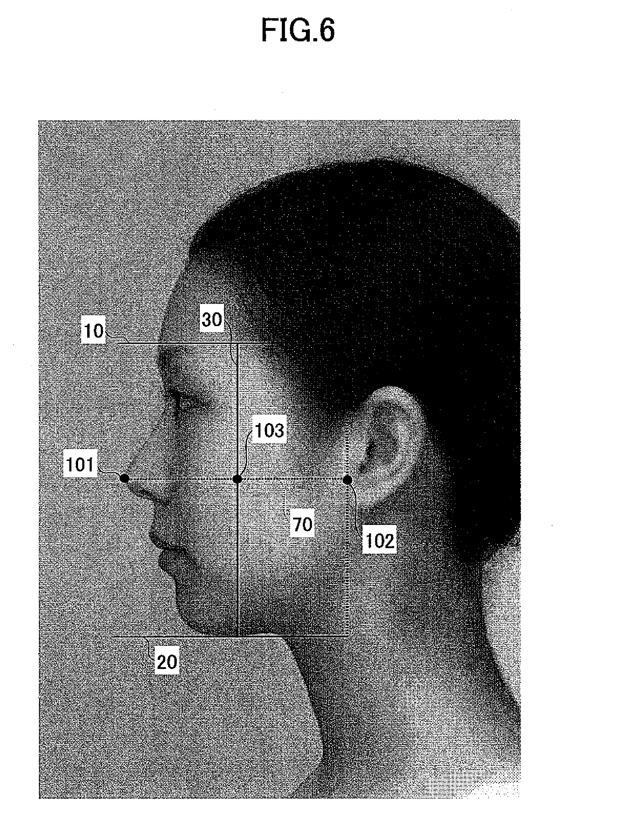

Alternatively, the midpoint 103 as in FIG. 4 may be set up as illustrated in FIG. 6. FIG. 6 is a diagram for explaining a method of setting up a reference point of the third line in order to set up the makeup area according to this embodiment.

As illustrated in FIG. 6, a straight line is horizontally drawn from the tip 101 of the nose to the base 102 of the ear (or the end of the face). It is supposed that this line is a line 70 (the seventh line). Next, the intersection at which the line 70 crosses the base 102 of the ear is determined, and the midpoint 103 is determined as being the midpoint of the segment of the line 70 which connects the tip 101 of the nose and the intersection. Alternatively, the midpoint 103 may be determined as being a point of the line 70 located at about 2/3 of the length of the line segment.

When the midpoint 103 is determined by a cosmetics engineer in setting up a makeup area directly in a subject's face at the actual spot of counseling, the cosmetics engineer may apply a scale, a pencil, etc. to the subject's side face and specify, as the midpoint 103, a point of the makeup area corresponding to the half of the length from the tip of the nose to the end of the face. This midpoint 103 may be marked using a concealer pencil, etc.

The makeup area 200 illustrated in FIG. 4 is set up as being the area surrounded by the thus determined four lines 10, 20, 30, and 40.

When setting up the makeup area 200 in an actual makeup job based on the image captured by a digital camera or the like as described above, the above-described lines 10-40 may be modified to suit the skin feature of an individual person, etc., such that the makeup area 200 may be set up.

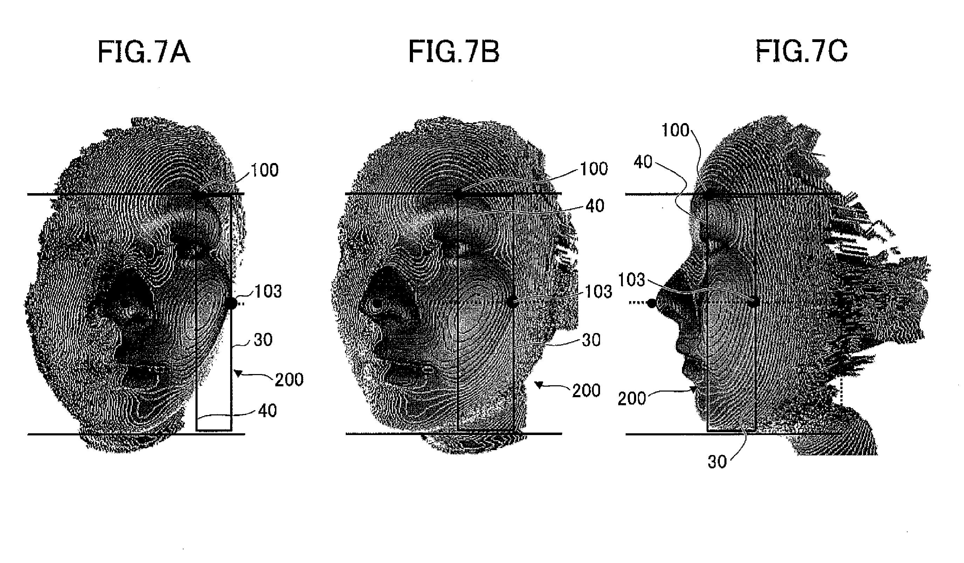

Next, the relationship between the thus set-up makeup area 200 of the face and the cubic effect of the face will be described. In order to study the relationship between the makeup area 200 and the cubic effect of the face, three-dimensional configuration data of a face as illustrated in FIGs. 7A-7C are used.

FIGs. 7A, 7B and 7C are diagrams for explaining the relationship between a set-up makeup area of the face and a cubic effect of the face using the three-dimensional configuration data of the face. In FIGs. 7A-7C, a contour-line image of the face of a subject which is obtained using a three-dimensional measuring device is illustrated. This subject's face is provided by the average of three-dimensional face configuration data of 15 women at the age of twenties. Therefore, it can be said that the configuration of the face of the average woman at the age of twenties is expressed.

In the contour-line image, the points at equal heights from a fixed reference position in the input three-dimensional configuration image of the face of the subject are linked together by line segments (contour lines). In this example, a reference plane (z= 0) of the contour lines is the plane formed by the three points: the eye lid portion of the right-hand side face, the root of the nose wing thereof, and the corner of the mouth thereof, and the contour lines are drawn for every 1mm height (indicated by the black lines in FIGs. 7A-7C and other portions are indicated by the white lines).

FIGs. 7A, 7B and 7C illustrate the images of the front face, the slanting face, and the side face, which are provided by rotation of the contour-line image provided under the above-described conditions, and the makeup area 200 is superimposed on each of the images illustrated. FIG. 7A expresses the makeup area 200 superimposed on the image of the front face, FIG. 7B expresses the makeup area 200 superimposed on the image of the slanting face, and FIG. 7C expresses the makeup area 200 on the image of the side face.

The portion where the line 40 indicating the beginning of the makeup area 200 is drawn corresponds to the cheekbone of the face. As is apparent from the front face of FIG. 7A and the slanting face of FIG. 7B, this portion is a raised portion of the cheek as illustrated by the contour lines. This portion is also equivalent to a raised portion of the face. The intervals of contour lines being distant from the line 40 and approaching the nose side are narrowed and a slope is provided.

The raised portion of the cheek continues up to around the central area of the makeup area 200 on the opposite side of the line 40, and the intervals of contour lines between the central area and the line 30 (which indicates the end of the makeup area 200) are dense. Hence, it appears that the configuration of the face has the curved surfaces on both sides of the line 40.

As is apparent from the side face of FIG. 7C, the intervals of contour lines being distant from the line 40 and approaching the nose side become dense suddenly, and conversely the intervals of contour lines around the central area on the opposite side become wide, where the highest portion of the cheek is reached. The intervals of contour lines between the line 30 (which indicates the end of the makeup area 200) and the base of the ear are constant and become gradually narrow, where a continuous slope is provided.

It is apparent from the three-dimensional configuration measurement data that the makeup area 200 is a portion where the configuration of the face is expressed by the height difference. Therefore, a feeling of depth of the face and a cubic effect can be effectively expressed by applying makeup to the makeup area 200 effectively.

Next, a makeup method in which makeup is applied to the makeup area 200 in the solid of the face of a subject effectively and the depth balance of a beautiful side face can be expressed will be described.

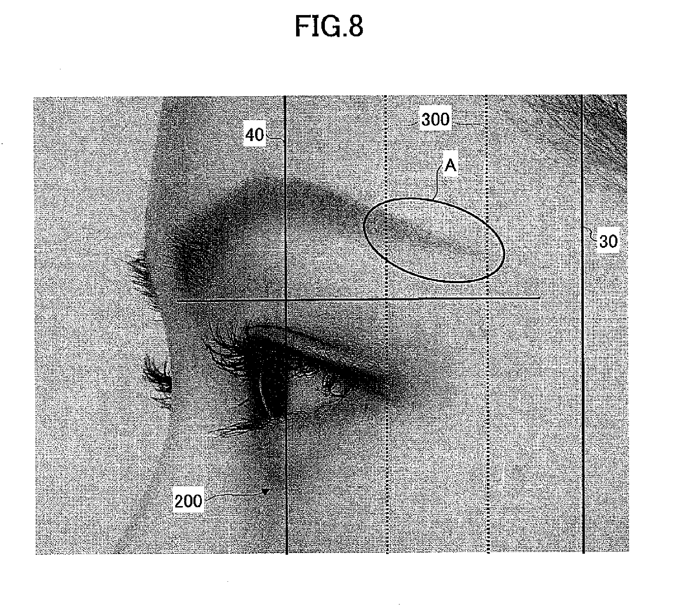

FIG. 8 is a diagram for explaining a method of applying makeup to an eyebrow tip portion in a makeup area according to this embodiment. First, as illustrated in FIG. 8, the makeup is applied so that the eyebrow tip portion is not lowered from the start point of the eyebrow. In practice, this may be checked from both the front face and the side face using a mirror, etc.

Moreover, gradation makeup is applied to the eyebrow tip portion up to the length corresponding to the central area 300 among the three divisional areas in the makeup area 200 between the line 30 and the line 40.

Specifically, it is desirable to apply gradation using a makeup material, such as an eyebrow pencil, to a makeup position A of the eyebrow tip portion as indicated by the oval A in FIG. 8, so that the gradation may merge into the skin and may disappear. Thereby, a cubic effect and a spreading effect can be provided.

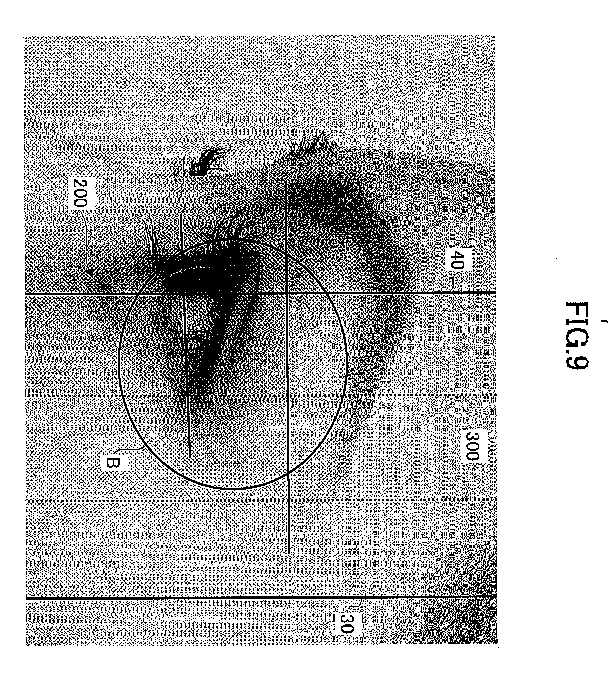

FIG. 9 is a diagram for explaining a method of applying makeup to an eye in a makeup area according to this embodiment. Specifically, as illustrated in FIG. 9, an eye makeup (which is an eye makeup gradation in a predetermined eye color) is applied using a makeup material, such as eye shadow, to a makeup position B of the makeup area 200 as indicated by the oval B in FIG. 9. A cubic effect can be provided by this gradation effect. An eyeliner is applied to keep the eye tip portion of the eyeliner from being lowered from the eye baseline. It is desirable to apply gradation to the eye tip portion to merge into the skin.

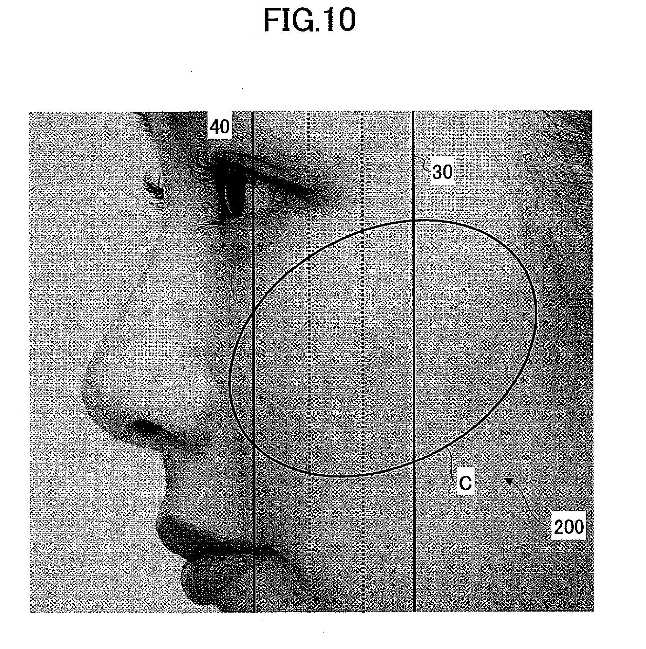

FIG. 10 is a diagram for explaining a method of applying makeup to a cheek in a makeup area according to this embodiment. As illustrated in FIG. 10, a cheek makeup (rouge) is applied to a makeup position C of the makeup area 200 indicated by the oval C in FIG. 10. A cheek gradation as a depth of the cheek makeup (rouge) is applies to two or more of the three divisional areas of the makeup area 200 near the line 40 (which indicates the beginning of the makeup area 200). By applying the cheek makeup, the arrangement of the whole face and the balance of the parts of the face, such as the eye, the nose, the mouth and the eyebrows, are adjusted. Specifically, the cheek makeup is applied so that the skeleton becomes conspicuous and a natural rise line may appear on the face. It is desirable to apply the gradation so that it may merge into the skin. Thereby, a feeling of depth of the face and a cubic effect can be provided.

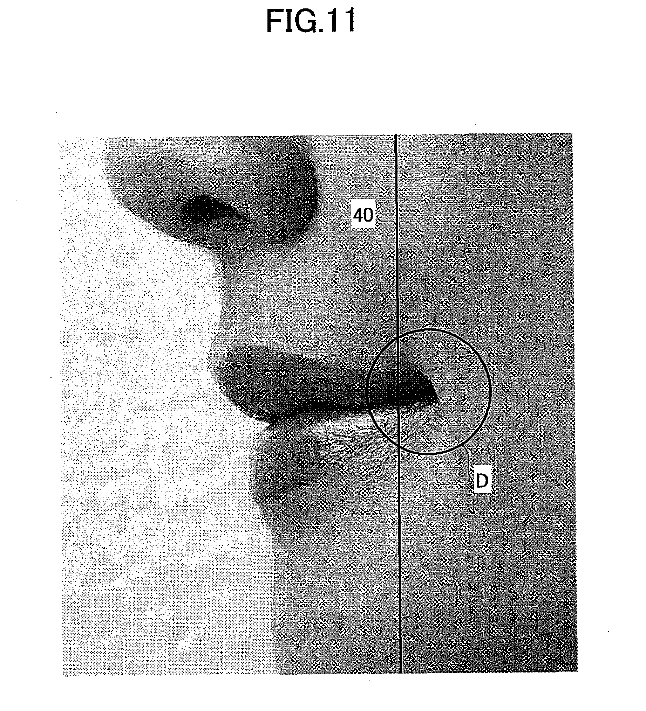

FIG. 11 is a diagram for explaining a method of applying makeup to a corner-of-mouth portion in a makeup area according to this embodiment. As illustrated in FIG. 11, the corner-of-mouth makeup is applied to the makeup position of the corner of the mouth as indicated by the oval D in FIG. 11, using a makeup material, such as a lip liner, to make the corner of the mouth sharp.

Next, the following questionnaire research is performed to 18 cosmetics engineers to evaluate the effects of the above-described makeup method according to this embodiment.

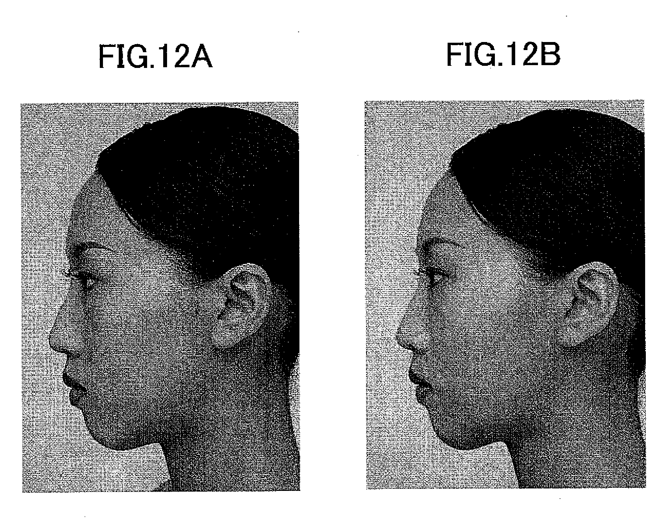

FIG. 12A and FIG. 12B illustrate photograph panels for explaining the verification of the effect of the gradation makeup applied to the eyebrow tip portion according to this embodiment. As illustrated in FIG. 12A and FIG. 12B, two photograph panels are prepared in order to examine the effect of applying the makeup to the tip of the eyebrow in the makeup area 200.

FIG. 12A illustrates the photograph panel in which the gradation is not applied to the eyebrow tip portion, and FIG. 12B illustrates the photograph panel in which the gradation is applied to the eyebrow tip portion.
As a result of the questionnaire research, all the 18 cosmetics engineers selected the photograph panel of FIG. 12B in which the gradation is applied to the tip of the eyebrow according to this embodiment as being a beautiful side face.

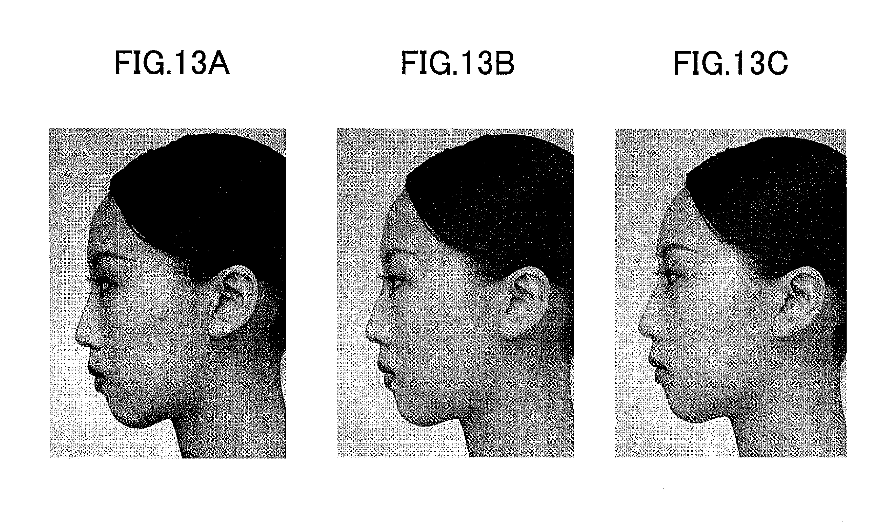

FIGs. 13A, 13B and 13C illustrate photograph panels for explaining the verification of the effect of additional line makeup applied to the eyebrow tip portion according to this embodiment. As illustrated in FIGs. 13A-13C, three photograph panels are prepared in order to check the length of the eyebrow tip portion.

FIG. 13A illustrates the photograph panel in which the length of the makeup-applied eyebrow tip portion exceeds the line 30 which indicates the end of the makeup area 200. FIG. 13B illustrates the photograph panel in which the makeup-applied eyebrow tip portion ends at the line 40 which indicates the beginning of the makeup area 200. FIG. 13C illustrates the photograph panel in which the length of the makeup-applied eyebrow tip portion according to this embodiment corresponds to the central area 300 exceeding the line 40 which indicates the beginning of the makeup area 200. As a result of the questionnaire research, all the 18 cosmetics engineers selected the photograph panel of FIG. 13C of this embodiment as a beautiful side face.

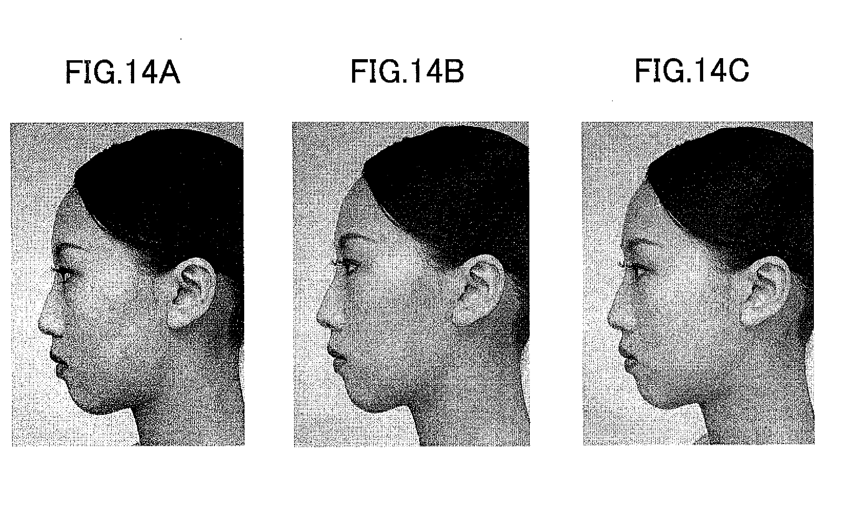

Next, FIGs. 14A, 14B and 14C illustrate photograph panels for explaining the verification of the effect of cheek makeup applied to the cheek of the side face according to this embodiment. As illustrated in FIGs. 14A-14C, three photograph panels are prepared in order to examine the effect of applying the makeup to the cheek in the makeup area 200.

FIG. 14A illustrates the photograph panel in which the cheek makeup according to this embodiment is applied to two or more of the three divisional areas of the makeup area 200 near the line 40 which indicates the beginning of the makeup area 200. FIG. 14B illustrates the photograph panel in which the applied cheek makeup exceeds the line 30 which indicates the end of the makeup area 200, and FIG. 14C illustrates the photograph panel in which the length of the applied cheek makeup does not reach the central area 300 but exceeds the line 40 which indicates the beginning of the makeup area 200.

As a result of the questionnaire research, 61% of the 18 cosmetic engineers selected FIG. 14A, 6% selected FIG. 14B, and 33% selected FIG. 14C. The photograph panel of FIG. 14A in which the cheek makeup according to this embodiment is applied was selected as a beautiful side face.

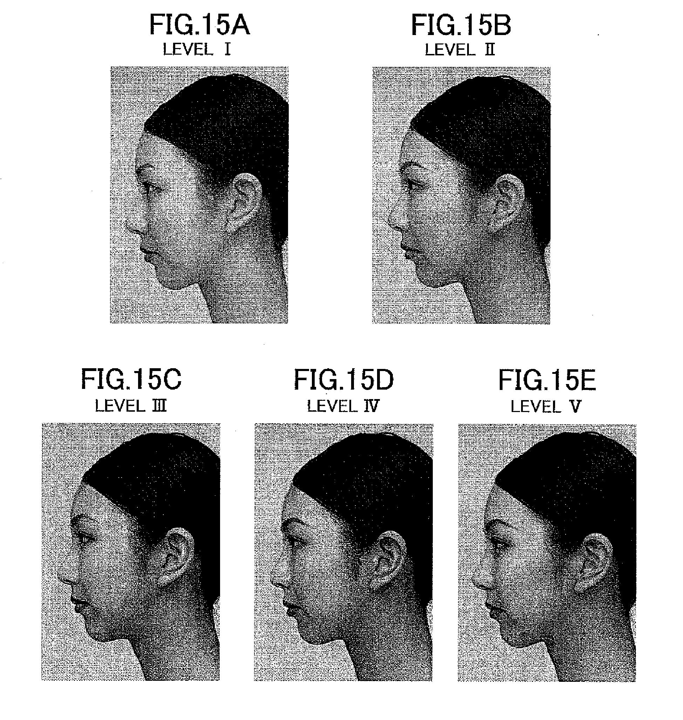

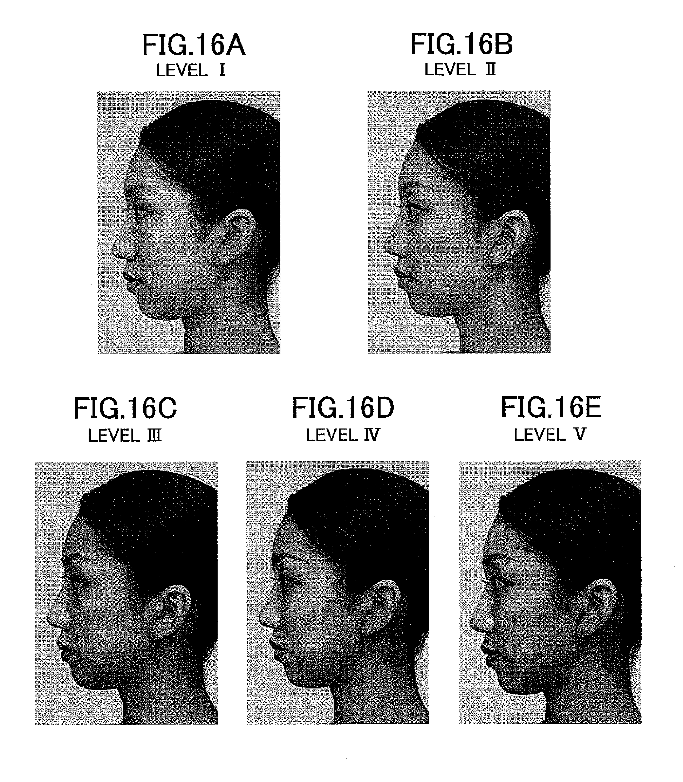

Next, FIGs. 15A-15E and FIGs. 16A-16E illustrate photograph panels of makeup stage levels I-V respectively for explaining the verification of the makeup effect according to this embodiment. As illustrated in FIGs. 15A-15E and FIGs. 16A-16E, the respective photograph panels of the makeup stage levels I to V are prepared in order to select a beautiful side face.

As illustrated in FIG. 15A and FIG. 16A, in the level I, the length of the eyebrow tip portion exceeds the line 40 which indicates the beginning of the makeup area 200 but does not reach the central area 300 among the three divisional areas of the makeup area 200. Similarly, the cheek makeup is applied to the area that does not reach the central area 300 in the makeup area 200.

As illustrated in FIG. 15B and FIG. 16B, in the level II, the length of the eyebrow tip portion of this embodiment corresponds to the central area 300 of the makeup area 200. Similarly, the cheek makeup is applied to two or more of the three divisional areas in the makeup area 300 near the line 40 which indicates the beginning of the makeup area 200, and a natural cubic effect is provided.

As illustrated in FIG. 15C and FIG. 16C, in the level III, the eyebrow tip portion of this embodiment ends around the central area 300 of the makeup area 200, and the gradation makeup is additionally applied to the eyebrow tip portion. In the level III, the eyeliner gradation is further applied to the eye tip portion to keep the eyeliner from being lowered from the eye baseline. Moreover, in the level III, the gradation makeup as the cheek processing is applied to two or more of the three divisional areas in the makeup area 200 near the line 40 which indicates the beginning of the makeup area 200, so that the highlight and the shade color are added further and a cubic effect is improved.

As illustrated in FIG. 15D and FIG. 16D, in the level IV, the makeup-applied eyebrow tip portion is increased in length to be larger than that of the level III.

As illustrated in FIG. 15E and FIG. 16E, in the level V, the makeup-applied the eyebrow tip portion is further increased in length to be larger than the eyebrow tip portion of the level IV.

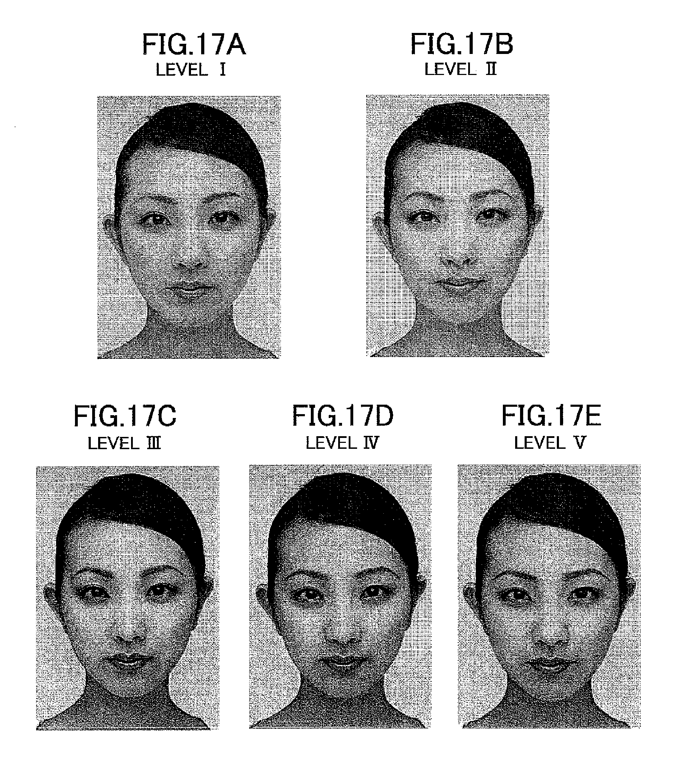

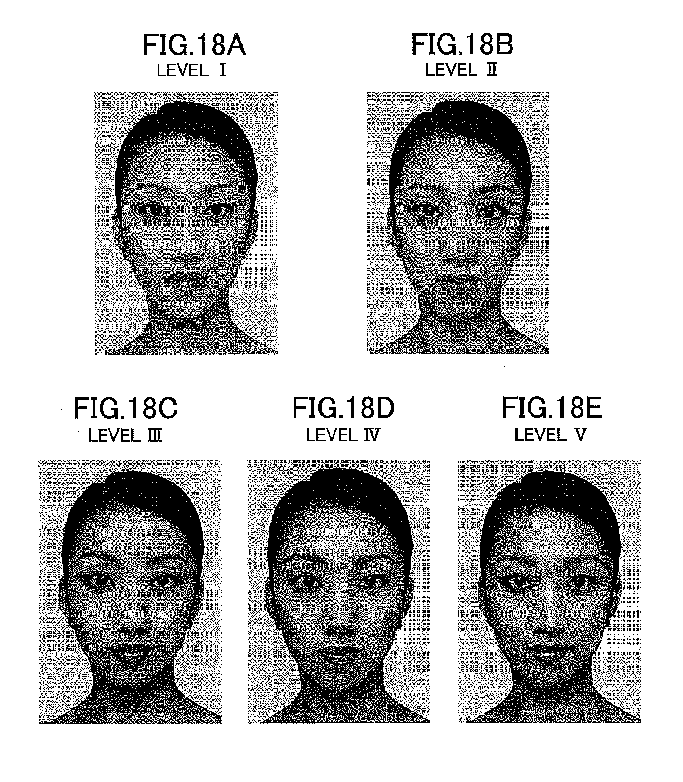

FIGs. 17A-17E illustrate photograph panels of front face images which correspond to the side face images of FIGs. 15A-15E respectively. FIGs. 18A-18E illustrate photograph panels of front face images which correspond to the side face images of FIGs. 16A-16E respectively. As illustrated in FIG. 17A-17E and FIGs. 18A-18E, the respective photograph panels are prepared in order to select a beautiful side face.

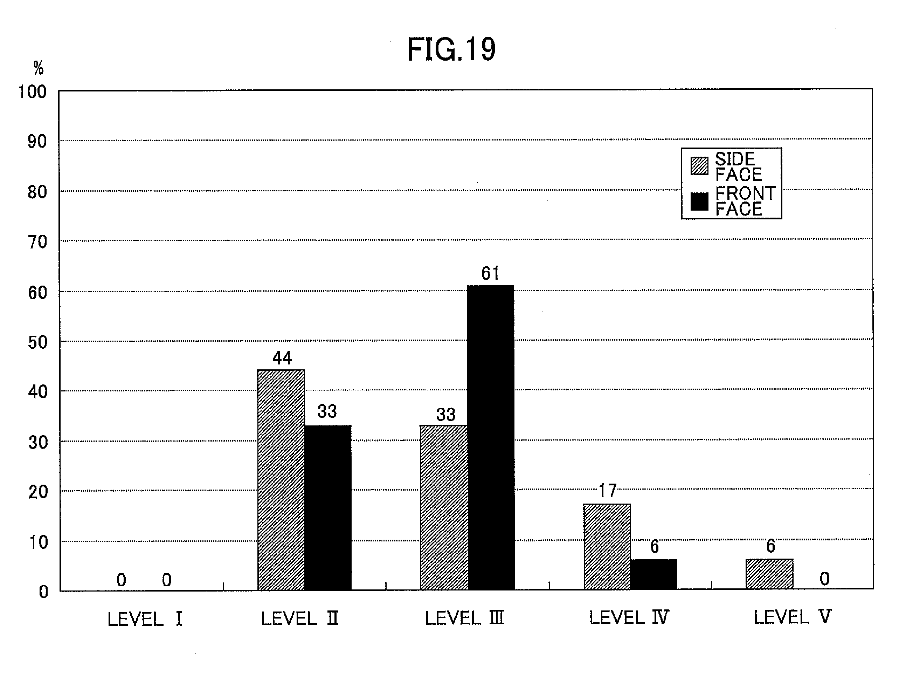

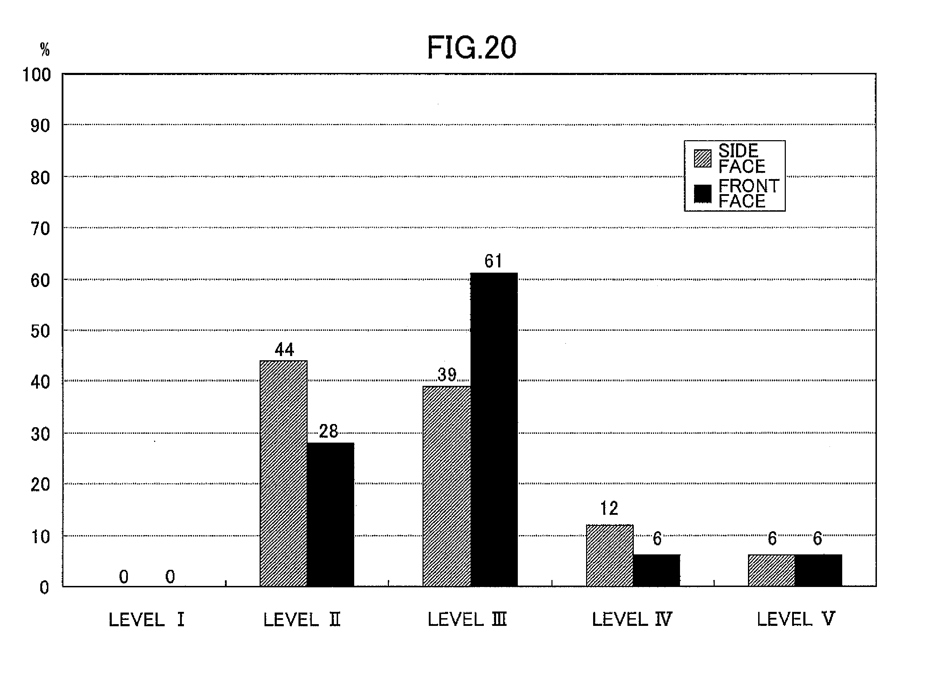

FIG. 19 illustrates the results of a questionnaire research as to which is considered a beautiful side face and a beautiful front face among the photograph panels of FIGs. 15A-15F and among the photograph panels of FIGs. 17A-17E respectively. FIG. 20 illustrates the results of a questionnaire research as to which is considered a beautiful side face and a beautiful front face among the photograph panels of FIGs. 16A-16E and among the photograph panels of FIGs. 18A-18E respectively.

As illustrated in FIG. 19 and FIG. 20, the results of the researches indicate that the level II of this embodiment was selected as a beautiful side face for both the photograph panels. Moreover, the results of the researches indicate that the level III in which the highlight and the shade color are added to this embodiment was also selected as a beautiful side face.

Accordingly, the side face of this embodiment was selected as a beautiful side face, and it is confirmed that the "depth balance" of the face can be expressed by the makeup method of this embodiment and a beautiful side face is realizable.

Moreover, the level II and the level III were selected as a beautiful front face, and it is confirmed that the side face of this embodiment is considered beautiful even when viewed from the front.

Accordingly, it is confirmed that if the above-described makeup method of the present disclosure is applied to the makeup area 200, a cubic effect of the face can be provided effectively and the completeness of the makeup can be increased.

From the above results, recognizing the above-described makeup area 200 and checking the makeup effect after the above-described makeup method is performed can provide the criterion of judgment of whether the beautiful side face is realizable.

Namely, when a cosmetics engineer performs a side-face makeup job to a customer or consults for a customer about the side face makeup method at the actual spots of counseling, such as a cosmetics sales corner of a department store, a beauty salon, etc., recognizing the above-described makeup area 200 and checking the makeup effect after the above-described makeup method is performed enables the cosmetics engineer to judge whether a beautiful side face is created by the makeup and judge whether a beautiful makeup no matter where it may be viewed from is attained.

### <Makeup Simulation Device; Functional Composition>

Next, the functional composition of a makeup simulation device which carries out the above-described makeup method will be described.

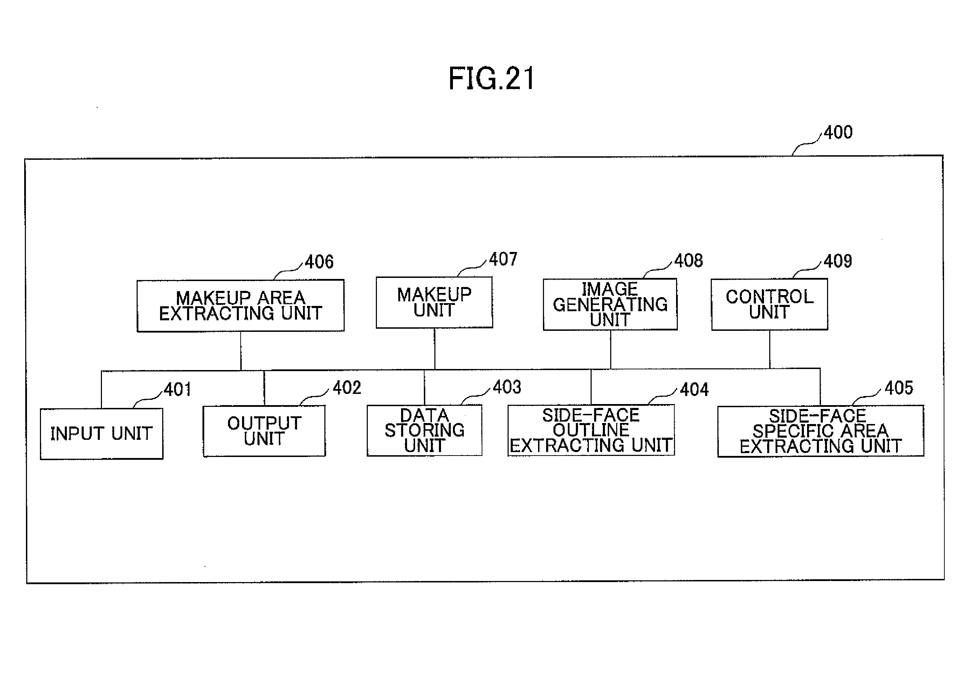

FIG. 21 illustrates the functional composition of a makeup simulation device according to this embodiment. As illustrated in FIG. 21, the makeup simulation device 400 of this embodiment includes an input unit 401, an output unit 402, a data storing unit 403, a side-face outline extracting unit 404, a side-face specific area extracting unit 405, a makeup area extracting unit 406, a makeup unit 407, an image generating unit 408, and a control unit 409.

The input unit 401 receives a start/end command of various instructions, input by a user, such as side-face outline extracting instructions, side-face specific area extracting instructions, makeup area extracting instructions, makeup instructions, and image generating instructions. For example, the input unit 401 includes a keyboard and a pointing device, such as a mouse. The input unit 401 further includes a function to input an image containing an image portion of an object (for example, a subject) captured by an imaging unit, such as a digital camera.

The output unit 402 displays and outputs the information input by the input unit 401, and the resulting information generated in response to the input information. The output unit 402 includes a display unit, a loudspeaker, etc. The output unit 402 may include a printer function.

The output unit 402 in such a case may print the result of the side-face outline extracting processing, the result of the side-face specific area extracting processing, the result of the makeup area extracting processing, and the result of the makeup processing on a printing medium, such as paper, so that the printing medium can be provided to the user.

Alternatively, the input unit 401 and the output unit 402 may be formed in an integral input/output unit, such as a touch panel. The touch panel in such a case can receive inputs from the user who touches a predetermined position of its display portion using a user's finger or using a pen-type input unit.

The data storing unit 403 stores various data items, including the result of the side-face outline extracting processing by the side-face outline extracting unit 404, the result of the side-face specific area extracting processing by the side-face specific area extracting unit 405, the result of the makeup area extracting processing by the makeup area extracting unit 406, the result of the makeup processing by the makeup unit 407, and the result of the image generating processing by the image generating unit 408. The various data items stored in the data storing unit 403 can be read out if needed.

The side-face outline extracting unit 404 performs background processing, such as color transforming and performs binarization line drawing processing as processing for extracting an outline of a side face of a subject from a captured photographic image. The side-face outline extracting unit 404 extracts an outline of the side face of the subject in the photographic image by pattern matching.

Based on the outline of the side face of the subject extracted from the photographic image by the side-face outline extracting unit 404, the side-face specific area extracting unit 405 performs processing which specifies a plurality of side-face specific areas of the subject in the photographic image by pattern matching with a reference side-face mask, and extracts a specific area from the specified areas.

The side-face specific area extracting unit 405 sets up a peak position of the outline based on the form of the outline of the side face of the subject extracted from the photographic image, and specifies a position of a jaw, and a position of a nose based on the set-up peak position.

The side-face specific area extracting unit 405 specifies an area of a mouth of the subject in the photographic image by pattern matching with a reference side-face mask, and further specifies a position of a corner of the mouth based on the specified area of the mouth. Similarly, the side-face specific area extracting unit 405 specifies an area of an eye of the subject in the photographic image, and further specifies an eye tip portion, a highest point of an upper eyelid, and a lowest point of a lower eyelid based on the specified area of the eye.

The side-face specific area extracting unit 405 specifies an area of an eyebrow of the subject in the photographic image, and specifies a position of an eyebrow ridge of the subject based on the specified area of the eyebrow. The side-face specific area extracting unit 405 specifies an area of an ear of the subject in the photographic image, and specifies a position of a base of the ear based on the specified area of the ear.

Thereby, the side-face specific area extracting unit 405 can extract the eyebrow ridge, the tip of the nose, and the base of the ear of the subject from the photographic image. For example, the above-described side-face specific area extracting work may be performed by selecting each specific area manually.

The makeup area extracting unit 406 performs extracting processing which extracts a makeup area 200 to which the makeup is to be applied as a simulation to the photographic image of the subject, based on a plurality of side-face specific areas extracted by the side-face specific area extracting unit 405.

For example, as illustrated in FIG. 4, based on the side face disposed in a horizontal position, the makeup area extracting unit 406 generates, relative to the side face of the subject in the photographic image, a line 10 drawn horizontally from an eyebrow ridge 100 of the side face to a hairline thereof, and generates a line 20 drawn horizontally from a jaw point of the side face of the subject in the photographic image to a neck thereof.

The makeup area extracting unit 406 generates a line 30 drawn vertically from the midpoint 103 of the segment of a horizontal line connecting a tip 101 of the nose of the side face of the subject in the photographic image and a base 102 of the ear thereof, and generates a line 40 drawn vertically drawn from the eyebrow ridge.

The makeup area extracting unit 406 extracts the area surrounded by these lines 10, 20, 30 and 40 as being the makeup area 200.

The makeup unit 407 performs makeup processing, including eyebrow makeup processing, lipstick processing, cheek makeup processing, shadow processing, etc. by using the known methods, to the makeup area 200 of the subject in the photographic image extracted by the makeup area extracting unit 406, so that the above-described makeup method is carried out on the makeup simulation device.

Specifically, the makeup unit 407 performs the eyebrow makeup processing which applies an eyebrow line to the extracted eyebrow area of the subject in the photographic image to keep an eyebrow tip portion of the eyebrow line from being lowered from a start point of the eyebrow. The makeup unit 407 may perform an eyebrow gradation processing which applies an eyebrow gradation to an eyebrow tip portion along a length corresponding to a central area 300 among three divisional areas into which the spacing in the makeup area 200 between the line 40 and the line 30 is vertically divided.

The makeup unit 407 performs the cheek makeup processing which applies a cheek makeup to two or more of the three divisional areas in the extracted makeup area 200 of the subject in the photographic image near the line 40. The makeup unit 407 may perform a cheek gradation processing which applies a cheek gradation to two or more of the three divisional areas as the cheek makeup processing.

The makeup unit 407 performs the shadow processing to the subject in the photographic image. For example, the makeup unit 407 may perform an eye makeup processing which applies an eye makeup to the extracted area of the eye of the subject in the photographic image in a predetermined eye color. If needed, the makeup unit 407 may perform an eyeliner makeup processing which applies an eyeliner makeup (gradation) to keep an eye tip portion of the eyeliner makeup from being lowered from the eye base line.

As the lipstick processing, the makeup unit 407 may perform a corner-of-mouth makeup processing which applies a lipstick makeup to a corner of the mouth of the subject extracted from the area of the month of the subject in the photographic image, using a lip liner, to make the corner of the mouth sharp.

The above-described operations may also be performed when an operating person who performs the makeup processing manually selects the related one of the parts of the screen displayed.

In response to the input instructions input by the user through the input unit 401, the image generating unit 408 generates the image data for displaying the makeup area of the subject in the photographic image, based on the side-face outline data obtained by the side-face outline extracting unit 404, the side-face specific area data obtained by the side-face specific area extracting unit 405, and the makeup area information obtained by the makeup area extracting unit 406, and outputs the image data by using the output unit 402.

The image generating unit 408 generates an image, based on the various data, including the image generation results by the image generating unit 408, the image data for displaying the makeup area 200 of the subject in the photographic image, and the makeup processing data obtained by the makeup unit 407, and outputs the image by using the output unit 402.

The control unit 409 controls operation of the whole makeup simulation device 400. Specifically, in response to the instructions input by the user from the input unit 401, the control unit 409 carries out control of each of the side-face outline extracting processing, the side-face specific area extracting processing, the makeup area extracting processing, the makeup processing, and the image generating processing. Accordingly, the makeup simulation processing which applies makeup to a side face of a subject effectively and attains a beautiful makeup no matter where the subject may be viewed from can be present to the user.

### <Makeup Simulation Device; Hardware Composition>

Alternatively, the above-described makeup simulation device 400 may be constituted by a general-purpose personal computer or a server. In such alternative embodiment, an executable program (makeup simulation program) is prepared to cause a computer to perform the respective functions, and the executable program is installed in the general-purpose personal computer or the server. The makeup simulation processing according to the present disclosure can be carried out by the general-purpose personal computer or the server.

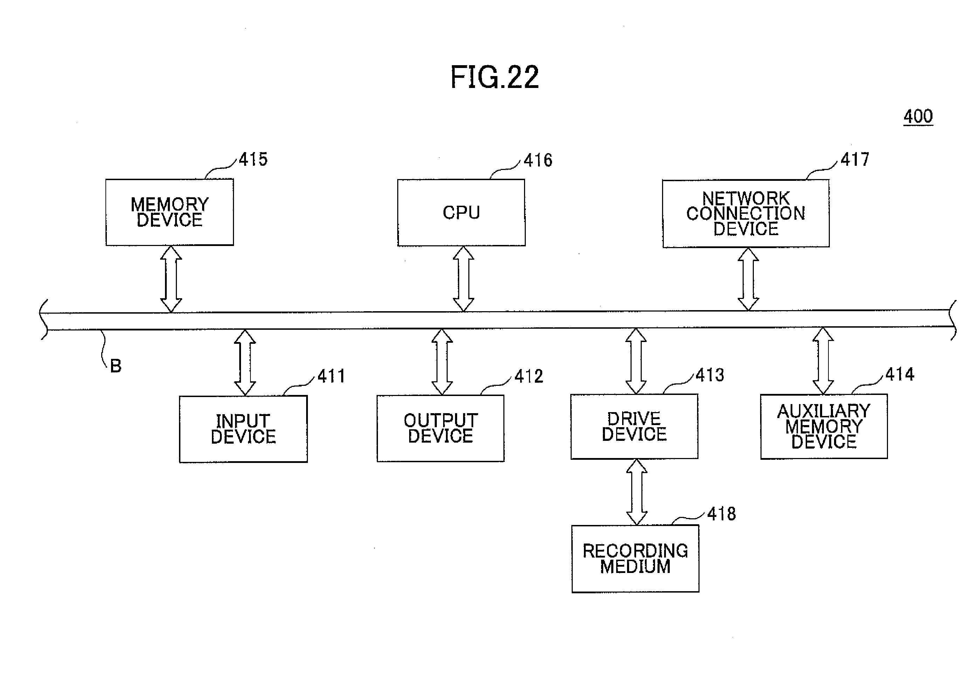

Next, the hardware composition of a computer which can carry out the makeup simulation processing according to this embodiment will be described. FIG. 22 illustrates the hardware composition of a computer which can carry out the makeup simulation processing according to this embodiment.

As illustrated in FIG. 22, the computer includes an input device 411, an output device 412, a drive device 413, an auxiliary memory device 414, a memory device 415, a CPU (central processing unit) 416 that performs various kinds of control, and a network connection device 417. These elements of the computer are interconnected by a system bus B.

The input device 411 includes a keyboard and a pointing device, such as a mouse, which are operated by a user. The input device 411 inputs various operational signals, such as a request of program execution, which are input from the user. The input device 411 further includes an input unit which inputs an image containing a side face portion of a subject captured by an imaging unit, such as a camera.

The output device 412 includes a display unit which displays various windows and data needed to operate the computer for performing the processing according to the present disclosure. This display unit can display the progress of execution of a program and the result of the execution, etc. in accordance with the control program executed by the CPU 416.

Alternatively, the input device 411 and the output device 412 may be formed in an integral input/output device, such as a touch panel. The touch panel in such a case can receive inputs from the user who touches a predetermined position of its display portion using a user's finger or using a pen-type input unit.

As in the hardware composition of FIG. 22, the executable program to be installed in the computer according to the present disclosure is provided by a removable recording medium 418, such as USB (universal serial bus) memory, a CD-ROM, etc. The recording medium 418 in which the executable program is recorded can be set in the drive device 413, and the executable program recorded in the recording medium 418 is installed from the recording medium 418 to the auxiliary memory device 414 via the drive device 413.

The auxiliary memory device 414 is a storage unit, such as a hard disk drive. The auxiliary memory device 414 stores the executable program according to the present disclosure and the control program executed by the computer. These programs in the auxiliary memory device 414 can be accessed if needed.

The memory device 415 stores the executable program read from the auxiliary memory device 414 by the CPU 416. The memory device 415 includes a ROM (read-only memory), a RAM (random access memory), etc.

The CPU 416 controls processing of the whole computer, such as various computations and input/output processes of data with the respective hardware components in accordance with the control program, such as OS (operating system), and the executable program stored in the memory device 415, so that the makeup simulation processing can be carried out. A variety of necessary information items can be read out from the auxiliary memory device 414 during execution of the program. The results of the execution of the program can be stored in the auxiliary memory device 414.

The network connection device 417 connects the computer with a communication network. The executable program can be acquired from an external terminal connected to the communication network. The results of execution of a program and the executable program according to the present disclosure can be supplied to an external terminal via the communication network.

By using the hardware composition described above, the makeup simulation processing according to the present disclosure can be carried out. The makeup simulation processing according to the present disclosure can be easily carried out by a general-purpose personal computer by installing the executable program therein.

### <Makeup Simulation Processing>

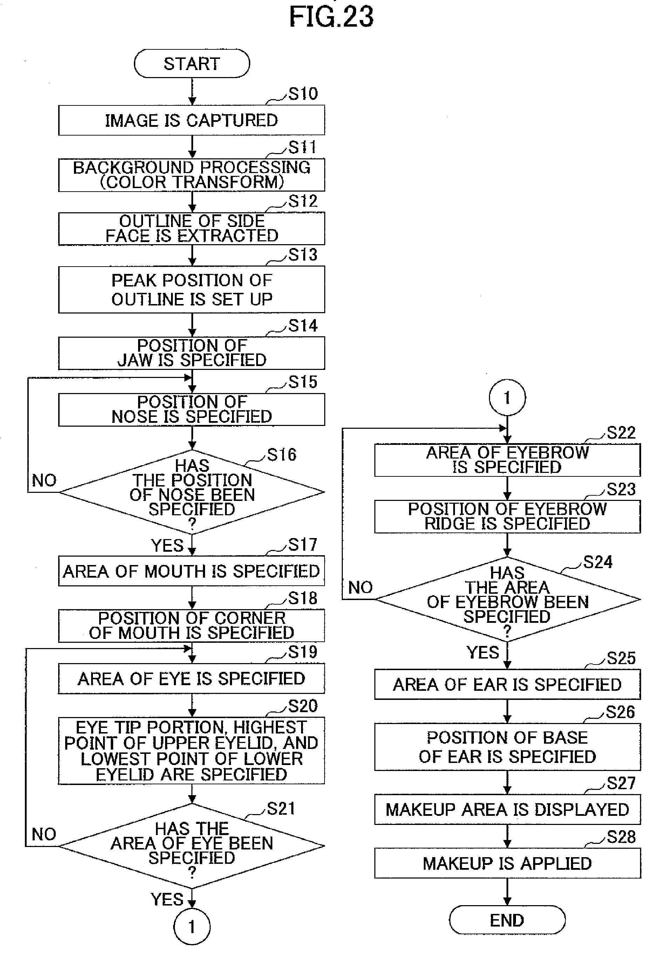

Next, the makeup simulation processing according to this embodiment will be described. FIG. 23 is a flowchart for explaining a makeup simulation method which carries out the makeup simulation processing according to this embodiment.

Upon start of the makeup simulation processing illustrated in FIG. 23, the input unit 401 receives a photographic image containing a side face of a subject disposed in a horizontal position, which image is captured by an imaging unit of a camera or the like (S10).

Subsequently, the side-face outline extracting unit 404 performs background processing of the captured image, such as color transforming (S11). The side-face outline extracting unit 404 performs binarization line drawing processing of the captured image and extracts an outline of the side face of the subject included in the photographic image by pattern matching (S12).

Subsequently, the side-face specific area extracting unit 405 sets up a peak position of the outline based on the form of the outline of the side face of the photographic subject extracted in the step S12 (S13).

Subsequently, based on the set-up peak position, the side-face specific area extracting unit 405 specifies a position of a jaw of the subject in the photographic image (S14) and specifies a position of a nose of the subject in the photographic image (S15).

Subsequently, the side-face specific area extracting unit 405 determines whether a position of the nose based on a predetermined feature amount of the position of the nose of the side face has been specified with respect to the position of the nose specified in the step S15 (S16).

When it is determined in the step S16 that the position of the nose has been specified, the side-face specific area extracting unit 405 specifies an area of the mouth of the subject in the photographic image by pattern matching with a reference side-face mask based on the outline of the side face of the subject extracted from the photographic image by the side-face outline extracting unit 404 (S17). When it is determined in the step S16 that the position of the nose has not been specified, the control is transferred to the step S15.

Subsequently, the side-face specific area extracting unit 405 specifies a position of the corner of the mouth of the subject in the photographic image based on the area of the mouth specified in the step S17 (S18).

Subsequently, the side-face specific area extracting unit 405 specifies an area of the eye of the subject in the photographic image by using the same method (S19). Subsequently, the side-face specific area extracting unit 405 specifies an eye tip portion of the subject in the photographic image, a highest point of an upper eyelid of the subject in the photographic image, and a lowest point of a lower eyelid of the subject in the photographic image based on the area of the eye specified in the step S19 (S20).

Subsequently, the side-face specific area extracting unit 405 determines whether the area of the eye has been specified (S21). When it is determined in the step S21 that the area of the eye has been specified, the side-face specific area extracting unit 405 specifies an area of the eyebrow of the subject in the photographic image by using the same method (S22).

When it is determined in the step S21 that the area of the eye has not been specified, the control is transferred to the step S19.

Subsequently, the side-face specific area extracting unit 405 specifies a position of the eyebrow ridge of the subject in the photographic image based on the area of the eyebrow specified in the step S22 (S23).

Subsequently, the side-face specific area extracting unit 405 determines whether the area of the eyebrow has been specified (S24).

When it is determined in the step S24 that the area of the eyebrow has been specified, the side-face specific area extracting unit 405 specifies an area of the ear of the subject in the photographic image in a similar manner (S25). When it is determined in the step S24 that the area of the eyebrow has not been specified, the control is transferred to the step S22.

Subsequently, the side-face specific area extracting unit 405 specifies a position of the base of the ear of the subject in the photographic image based on the area of the ear specified in the step S25 (S26).

Subsequently, based on the plurality of the thus specified side-face specific areas, the makeup area extracting unit 406 extracts a makeup area 200 from the subject in the captured photographic image by using the above-described method, and displays the extracted makeup area 200 on the side face of the subject in the photographic image (S27). This makes it possible to provide a visual indication of the makeup area 200 of the captured image for the subject.

Subsequently, the makeup unit 407 applies makeup to the makeup area 200 of the subject in the photographic image (S28). The makeup unit 407 performs the above-described makeup processing, including the eyebrow makeup processing, the cheek processing, the shadow processing, and the lipstick processing, in the makeup area 200 of the subject in the extracted photographic image by using the known methods.

Accordingly, the above-described makeup simulation processing carries out the makeup processing in the makeup area 200 of the subject in the captured photographic image so that a depth balance of a beautiful side face can be expressed. It is possible to provide specific effects of the above-described makeup method to the subject.

Alternatively, in the above-described processing, the input image or the image obtained by the respective processing may be input to the data storing unit 403. Alternatively, in the above-described processing, the input image, the progress of execution of the respective processing or the result of the execution, and the result of the processing when requested by the user from the input unit 401 may be supplied through the output unit 402.

As described in the foregoing, according to the present disclosure, it is possible to provide a makeup method, a makeup simulation device, and a makeup simulation program which apply makeup to a side face of a subject effectively and attain a beautiful makeup no matter where the subject may be viewed from.

The present disclosure is not limited to the above-described embodiments, and it is to be understood that variations and modifications may be made without departing from the scope of the present disclosure as claimed.

### INDUSTRIAL APPLICABILITY

The present disclosure is applicable to the makeup methods performed in beauty salons, cosmetics sales corners of department stores, makeup seminars, beauty parlors, etc., and involves industrial applicability.

This international application is based upon and claims the benefit of priority of Japanese patent application No. 2008-012013, filed on January 22, 2008, and Japanese patent application No. 2009-010416, filed on January 20, 2009, the contents of which are hereby incorporated by reference in their entirety.

## Claims

1. A makeup method for applying makeup to a side face of a subject, comprising:
a side-face specific area extracting step of extracting a specific area from a side face of the subject rendered on a plane of the subject;
a makeup area extracting step of extracting a makeup area to which the makeup is to be applied based on a plurality of specific areas of the side face extracted in the side-face specific area extracting step; and
a makeup step of applying the makeup to a facial area of the subject corresponding to the makeup area extracted in the makeup area extracting step.

2. The makeup method according to claim 1, wherein, in the makeup area extracting step, an area of the side face surrounded by:
a first line horizontally drawn from an eyebrow ridge of the side face to a hairline thereof;
a second line horizontally drawn from a jaw point of the side face to a neck thereof;
a third line drawn vertically from a midpoint of a horizontal line segment connecting a tip of a nose of the side face to a base of an ear thereof; and
a fourth line drawn vertically from the eyebrow ridge, on the basis of the side face disposed in a horizontal position
is extracted as the makeup area to which the makeup is applied.

3. The makeup method according to claim 2, wherein, in the makeup area extracting step, an intersection of a fifth line drawn from the tip of the nose to the jaw point and a sixth line drawn from the eyebrow ridge to the tip of the node is determined, and
the third line is determined as being a line drawn vertically from a midpoint of a segment of a seventh line drawn horizontally from the intersection to the base of the ear, and
wherein, in the makeup area extracting step, the area of the side face surrounded by the first line, the second line, the third line, and the fourth line is extracted as the makeup area.

4. The makeup method according to claim 2, wherein, when applying the makeup to the facial area of the subject corresponding to the makeup area in the makeup step, at least one of:
an eyebrow makeup step of applying an eyebrow line along a length corresponding to a central area among three divisional areas of a spacing in the makeup area between the third line and the fourth line to keep an eyebrow tip portion of the eyebrow line from being lowered from a start point of the eyebrow;
a cheek makeup step of applying a cheek makeup to two or more of the three divisional areas near the fourth line;
an eye makeup step of applying an eye makeup in a predetermined eye color;
an eyeliner makeup step of applying an eyeliner makeup to keep an eye tip portion of the eyeliner makeup from being lowered from an eye baseline; and
a corner-of-mouth makeup step of applying a lipstick makeup using a lip liner to make the corner of the mouth sharp,
is performed.

5. The makeup method according to claim 4, wherein, when applying the makeup to the makeup area of the side face in the makeup step, at least one of:
an eyebrow gradation step of applying an eyebrow gradation to the central area;
a cheek gradation step of applying a cheek gradation to two or more of the three divisional areas near the fourth line; and
an eye makeup gradation step of applying an eye makeup gradation in the predetermined eye color to the eyeliner
is performed.

6. A makeup simulation device for applying makeup to a subject in a photographic image which is generated by capturing a side face of the subject, comprising:
a side-face outline extracting unit to extract an outline of a side face contained in the photographic image;
a side-face specific area extracting unit to extract a specific area of the side face based on the outline of the side face extracted by the side-face outline extracting unit;
a makeup area extracting unit to extract a makeup area of the subject in the photographic image to which the makeup is to be applied, based on a plurality of specific areas extracted by the side-face specific area extracting unit; and
a makeup unit to apply the makeup to the makeup area extracted by the makeup area extracting unit.

7. The makeup simulation device according to claim 6, wherein the makeup area extracting unit is arranged to extract, as the makeup area to which the makeup is applied, an area of the side face surrounded by:
a first line horizontally drawn from an eyebrow ridge of the side face to a hairline thereof;
a second line horizontally drawn from a jaw point of the side face to a neck thereof;
a third line drawn vertically from a midpoint of a horizontal line segment connecting a tip of a nose of the side face to a base of an ear thereof; and
a fourth line drawn vertically from the eyebrow ridge, on the basis of the side face disposed in a horizontal position.

8. A makeup simulation program which, when executed by a computer, causes the computer to execute a makeup method in a makeup simulation device, the makeup method comprising:
extracting, by a side-face outline extracting unit of the makeup simulation device, an outline of a side face contained in the photographic image;
extracting, by a side-face specific area extracting unit of the makeup simulation device, a specific area of the side face based on the outline of the side face extracted by the side-face outline extracting unit;
extracting, by a makeup area extracting unit of the makeup simulation device, a makeup area of the subject in the photographic image to which the makeup is to be applied, based on a plurality of specific areas extracted by the side-face specific area extracting unit; and
applying, by a makeup unit of the makeup simulation device, the makeup to the makeup area extracted by the makeup area extracting unit.
